Europäisches Patentamt

(19) European Patent Office

Office européen des brevets

(11) Numéro de publication : **0 321 339 B1**

(12) **FASCICULE DE BREVET EUROPEEN**

(45) Date de publication du fascicule du brevet :
28.08.91 Bulletin 91/35

(51) Int. Cl.⁵ : **F04B 49/06, F04B 13/00**

(21) Numéro de dépôt : 88403176.6

(22) Date de dépôt : 14.12.88

(54) Dispositif de réglage du débit d'une pompe doseuse alternative.

(30) Priorité : 17.12.87 FR 8717635

(43) Date de publication de la demande :
21.06.89 Bulletin 89/25

(45) Mention de la délivrance du brevet :
28.08.91 Bulletin 91/35

(84) Etats contractants désignés :
AT BE CH DE ES GB GR IT LI LU NL SE

(56) Documents cités :
EP-A- 0 025 575
DE-A- 3 301 741

(56) Documents cités :
FR-A- 2 331 021
FR-A- 2 500 081
FR-A- 2 588 319
GB-A- 1 176 870

(73) Titulaire : DOSAPRO MILTON ROY, Société
dite:
F-27360 Pont Saint Pierre (FR)

(72) Inventeur : Griesmar, René André
5 rue du Bosc
F-27460 Alizay (FR)

(74) Mandataire : Robert, Jean-Pierre et al
CABINET BOETTCHER 23, rue la Boétie
F-75008 Paris (FR)

EP 0 321 339 B1

Jouve, 18, rue Saint-Denis, 75001 PARIS

## Description

Dans le brevet français 2588319, on a décrit un procédé permettant d'obtenir un réglage précis du débit d'une pompe doseuse en agissant sur trois paramètres de l'alimentation électrique d'un moteur synchrone réversible, à savoir l'enroulement auquel elle est appliquée déterminant ainsi le sens de rotation du moteur, le temps pendant lequel elle est appliquée déterminant la longueur de la demi-course de l'organe de pompage et le temps total d'un cycle aller-retour de cet organe déterminant la cadence de la pompe. Dans ce procédé, il est fait usage d'un microprocesseur qui, à partir d'une donnée d'entrée correspondant au débit désiré exprimé en fraction du débit maximal de la pompe, ou de deux données d'entrée correspondant à la course et la cadence désirées, procède à la sélection des paramètres utiles à la commande du moteur parmi des valeurs qu'il comporte en mémoire et gère la commande de ce moteur en fonction des paramètres sélectionnés.

On s'est rendu compte que le procédé décrit convient à des pompes de haut de gamme, car les valeurs mémorisées dans le microprocesseur impliquent de la part de ces pompes un fonctionnement possédant très peu de disparité d'une pompe à l'autre, donc une fabrication de série très soignée pour tenir la précision désirée qui est inférieure à 1%.

Il existe par ailleurs des pompes doseuses moins sophistiquées dans lesquelles le réglage du débit s'opère d'une part, par réglage de la cadence de la pompe au moyen d'une régulation électronique et, d'autre part, par réglage de la course en agissant mécaniquement sur les éléments de la chaîne de transmission, au moyen de butées au déplacement des organes de transmission ou de servo-moteurs pour l'entraînement de ces organes.

La présente invention entend étendre les avantages d'un réglage de débit qui n'intervient pas sur les éléments mécaniques par le biais d'organes limiteurs de course dont l'ajustement est toujours délicat et sujet à déréglage, ou par la mise en oeuvre de servo-moteurs, en mettant en oeuvre des moyens simplifiés par rapport aux moyens décrits dans le brevet français rappelé ci-dessus.

A cet effet, l'invention a donc pour objet un dispositif de réglage du débit d'une pompe doseuse comportant un organe de pompage attelé à un organe de transmission convertissant le mouvement rotatif d'un moteur d'entraînement réversible en un mouvement alternatif de l'organe de pompage, comprenant des moyens de réglage de l'amplitude du mouvement alternatif et des moyens de réglage de la période de ce mouvement.

Selon une caractéristique importante de l'invention, les moyens de réglage de l'amplitude du mouvement alternatif comprennent :

— un capteur du déplacement de l'organe de transmission, émettant une pluralité d'impulsions dont le nombre est converti en une valeur analogique fonction de la valeur de l'amplitude du déplacement,

— un comparateur de ladite valeur analogique à une valeur de consigne réglable émettant en sortie un signal lorsque les valeurs comparées sont égales,

— un circuit électronique de commande recevant en entrée le signal émis par le comparateur, qui en réponse à ce signal d'une part commute l'alimentation du moteur pour inverser son sens de rotation et, d'autre part, active des moyens de détection du retour de l'organe de transmission à une position origine,

— ces moyens de détection émettant en direction du circuit électronique un signal lorsque la position-origine est atteinte, en réponse auquel le circuit logique commande l'interruption de l'alimentation du moteur, tandis que les moyens de réglage de la période du mouvement sont constituées par un émetteur d'impulsions en direction du circuit électronique, en réponse auxquelles ce dernier établit l'alimentation du moteur pour éloigner l'organe de transmission de ladite position d'origine.

Dans un mode de réalisation de l'invention, le capteur du déplacement de l'organe de transmission est constitué par un codeur optique calé en rotation sur un élément tournant de l'organe de transmission entraîné par le moteur.

Par ailleurs, les moyens de détection de la position-origine sont constitués par un compteur des impulsions du courant alternatif d'alimentation du moteur, remis à zéro à chaque impulsion émise par le codeur optique, ce dernier possédant une plage inactive au voisinage de la position-origine dans laquelle aucune impulsion n'est émise, le compteur émettant un signal en direction du circuit électronique lorsque les impulsions comptées sont égales à une valeur de consigne.

Le circuit logique peut être connecté à un émetteur d'impulsions interne, ce qui permet de régler le débit de la pompe de manière absolue, ou peut être connecté à un émetteur d'impulsions externe, ce qui permet d'asservir le débit de la pompe à une autre grandeur par exemple le débit du fluide de la canalisation principale dans laquelle les doses sont injectées, l'émetteur d'impulsions externe étant alors un débit-mètre. Une prise permet de sélectionner l'un ou l'autre des émetteurs, l'émetteur externe étant raccordable à l'appareil par un connecteur enfichable.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels :

— la figure 1 est un schéma d'un mode de réalisation de l'invention,

— la figure 2 est un schéma de détail du codeur optique mis en oeuvre dans l'invention.

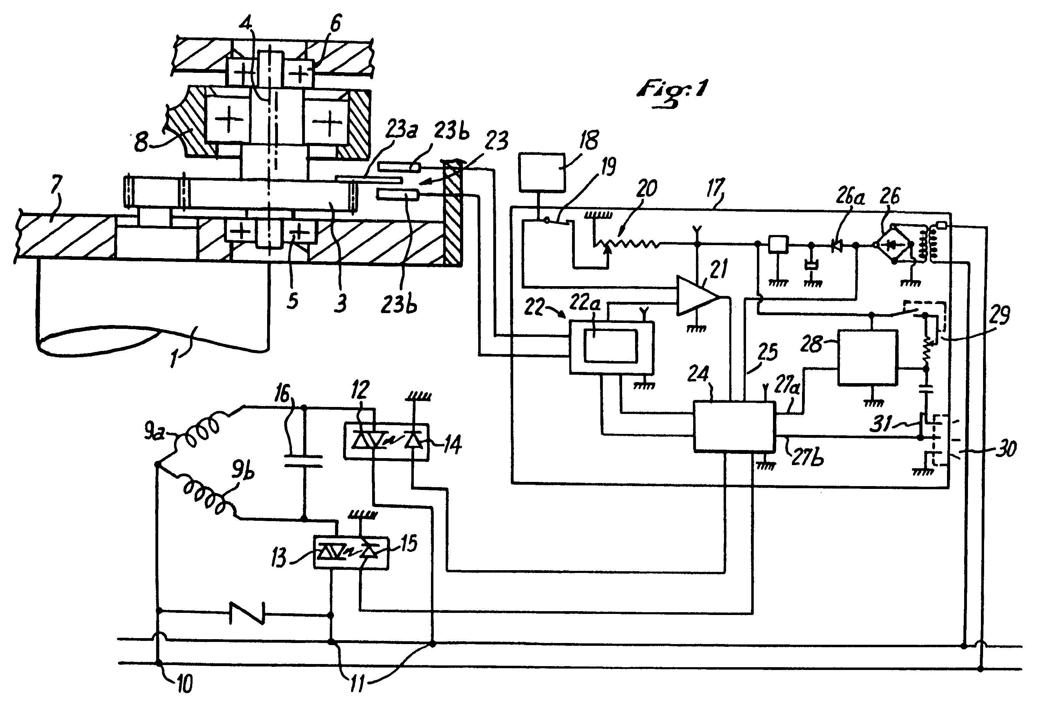

En se reportant tout d'abord à la figure 1, on voit, schématiquement représenté, un moteur 1 réversible et synchrone, d'entraînement au moyen d'un réducteur 2, 3 d'un vilebrequin 4 maintenu tournant dans des paliers 5 et 6 d'un bâti 7. Le manchon du vilebrequin porte le pied 8 d'une bielle d'actionnement d'un organe de pompage non représenté, qui peut être un piston ou une membrane.

Un entraînement en continu du vilebrequin à une vitesse de rotation donnée, imposée par la vitesse de rotation du moteur d'entraînement et du rapport de réduction du réducteur 2, 3 engendre le débit maximum de la pompe.

On sait que pour délivrer une fraction de ce débit maximal, il faut rendre discontinu et alternatif le mouvement rotatif d'entraînement du vilebrequin pour pouvoir agir et sur la course de la tête 8 de bielle et sur la cadence de pompage.

Pour ce faire, dans le cas où le moteur 1 est un moteur synchrone réversible possédant deux enroulements 9a et 9b on prévoit un dispositif de commande de l'alimentation de ces enroulements de la manière suivante.

Le point commun de ces enroulements est connecté à une borne 10 d'alimentation alternative de fréquence connue (par exemple 50 Hz). Chacun des enroulements est également relié à l'autre borne 11 de cette source par l'intermédiaire d'un triac 12, 13 optocouplé à une diode électroluminescente 14,15 qui en constitue l'organe de commande. Un condensateur 16 est disposé de manière connue entre les deux enroulements 9a et 9b. Lorsque le triac 12 est rendu conducteur, les enroulements sont alimentés l'un 9a par la tension du secteur et l'autre 9b par une tension déphasée du fait du condensateur, engendrant la rotation du vilebrequin dans un premier sens de rotation. L'inversion de sens de rotation est obtenue par la commutation de l'alimentation, le triac 12 n'étant plus passant alors que le triac 13 est rendu conducteur. L'excitation des diodes 14 et 15 est réalisée par une unité de commande 17 en fonction des différentes phases d'alimentation du moteur 1 que l'on désire réaliser pour obtenir le débit souhaité de la pompe.

Cette unité de commande 17 comporte tout d'abord des moyens de réglage de la course de l'équipage mobile. Ces moyens comportent un organe de sélection 20 d'une valeur de consigne correspondant à la course souhaitée de la bielle. Cette course pourra être exprimée en fraction (%) de la course totale au moyen d'un potentiomètre commandé manuellement délivrant une valeur analogique (tension) proportionnelle à la fraction désirée.

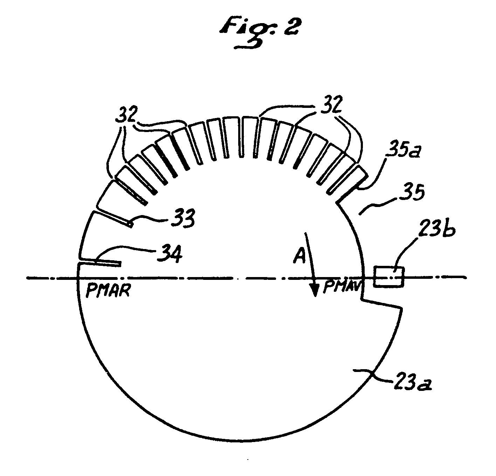

Cette valeur de consigne est introduite dans un comparateur 21 qui reçoit également une tension variable engendrée par un convertisseur 22. Ce dernier reçoit en entrée les impulsions délivrées par un codeur optique 23. Le nombre de ces impulsions est en relation avec la course angulaire d'un disque 23a appartenant au codeur et dont il sera donné une description plus précise en regard de la figure 2. Ce disque 23a est solidaire de la roue 3 du réducteur 2, 3 elle-même calée en rotation sur le vilebrequin 4.

Un codeur optique d'un autre type pourrait être mis en oeuvre dans ce dispositif. Il pourrait notamment s'agir d'un capteur de déplacement de la bielle ou de l'organe de pompage, émettant une valeur analogique ou numérique convertie pour être comparée avec la valeur de consigne.

Lorsque l'égalité est constatée par le comparateur 21, un signal est émis en sortie du comparateur en direction d'un circuit électronique de commande 24 qui, en réponse, commande l'extinction de la diode 14 et, après un temps de repos très court, l'excitation de la diode 15. L'alimentation du moteur 1 est alors commutée et ce dernier tourne en sens contraire.

Dans le même temps, le circuit électronique 24 par l'intermédiaire d'une logique de commande qu'il possède, active un compteur 22a appartenant au convertisseur 22. La logique de commande reçoit alors en entrée 25 des impulsions correspondant à la fréquence du courant alternatif d'alimentation du réseau (en fait, à la fréquence de 100 Hz compte tenu du pont de diodes 26 et de la diode 26a) et dirige ces impulsions du secteur vers le compteur 22a du convertisseur 22. Ce compteur est remis à zéro par chacune des impulsions émises par le codeur optique 23 tournant en sens inverse. Le codeur optique possède une plage angulaire définie par rapport à une position du vilebrequin (par exemple au voisinage de sa position correspondant au point mort avant de l'organe de pompage), pendant laquelle il n'émet plus d'impulsion. Le compteur 22a n'étant alors plus remis à zéro compte les impulsions qu'il reçoit en entrée jusqu'à avoir atteint un nombre correspondant à une valeur de consigne déterminée. A ce moment, le convertisseur 22 délivre un signal en direction du circuit électronique 24 qui, en réponse, commande l'extinction de la diode 15. Le moteur s'arrête et l'équipage mobile est dans une position dite position-origine (par exemple le point mort avant).

On voit qu'ainsi l'équipage mobile s'arrête toujours à la fin de sa course de retour, dans une position fixe déterminée.

Le démarrage d'un nouveau cycle de pompage est commandé par le circuit 24 qui excite la diode 14 en réponse à un signal qu'il reçoit sur l'une des deux entrées 27a et 27b. L'entrée 27a est reliée à la sortie d'un générateur d'impulsions 28 dont la fréquence peut être manuellement réglée au moyen, par exemple d'un potentiomètre 29, intégré dans un circuit de type RC. Ce générateur peut être de tout type connu et comporter, s'il est numérique, des moyens d'horloge indépendants. En réglant la fréquence de ces impulsions on règle le temps de cycle.

En alternative, le circuit 24 peut recevoir sur son entrée 27b des impulsions émises par un générateur extérieur (par exemple un débit-mètre). Dans ces conditions la cadence de la pompe et, pour une course donnée, son débit, peuvent être asservis à un paramètre extérieur du type débit de circulation du fluide dans lequel les doses sont introduites. Ce générateur extérieur peut être connecté à l'appareil par un cordon enfichable en 30, et cette connexion a pour effet la commande d'un commutateur 31 qui isole le circuit 24 du cadenceur interne 28.

Sur la figure 2 on a représenté le disque 23a qui fait partie du codeur optique 23 et qui coopère avec un capteur 23b, connu en lui-même. Ce disque comporte une pluralité de fentes 32, 33, 34 et une encoche 35.

Schématiquement, le capteur 23b émet une impulsion au passage de chaque fente. Cette impulsion incrémente le compteur 22a du convertisseur 22 lors de la course d'aspiration de la pompe et remet ce compteur à zéro lors de la course inverse, comme expliqué ci-dessus. La rotation du disque 23a lors de la course d'aspiration est indiquée par la flèche A sur la figure 2.

L'espacement des fentes défini par l'angle au centre entre deux fentes successives, sera fonction de la sensibilité du réglage que l'on veut donner à la pompe, et devra satisfaire la fonction sinusoïdale qui régit la course de la tête de bielle en fonction de l'angle de rotation du manchon du vilebrequin. Dans la pratique, comme l'excentricité du manchon est au moins dix fois inférieure à la longueur de la bielle, l'espacement angulaire des fentes sur le disque répond à une fonction du type arc-sinus de chaque fraction de course désirée.

La sensibilité du réglage trouve une limite due au fonctionnement des triacs. En effet, on sait que ceux-ci deviennent bloquant en l'absence d'excitation de la diode électroluminescente et au passage à zéro du courant d'alimentation. Ainsi un triac ne coupe l'alimentation qu'il contrôle au plus tard 10 millisecondes après l'extinction de la diode, pour un courant de fréquence 50 Hz.

Ces 10 millisecondes correspondent à un angle de rotation du vilebrequin qui, pour un moteur synchrone donné à la vitesse de synchronisme, sera d'autant plus grand que le rapport de réduction du réducteur 2, 3 est petit, donc que le vilebrequin tourne vite. Par exemple, si l'on veut réaliser un réglage du débit de 5 en 5% dans une pompe entraînée par un moteur synchrone dont la vitesse de synchronisme est de 375 tours par minute et le rapport de réduction de 3, 5, 10 millisecondes correspondent à 6,43 degrés d'angle de rotation du vilebrequin. Or la fonction arc-sinus susdite donne pour 5% de course une valeur angulaire entre deux fentes de l'ordre de 5, 7 degrés d'angle après un quart de tour du vilebrequin à partir de l'un des points morts de l'équipage mobile.

Si on constate, par exemple, qu'ayant affiché 45% l'extinction de la diode du triac considéré coïncide avec la fin d'une demi-période du courant, il y aura effectivement égalité entre la course réelle et la course affichée. A 50%, c'est-à-dire pour 5, 7 degré d'angle supplémentaires, le triac fonctionnera encore pendant une course correspondant à 0,7 degrés d'angle, et la course réelle sera un peu supérieure à 50%. En revanche, à 40%, c'est-à-dire pour 5, 8 degrés d'angle en moins, le triac ne deviendra bloquant qu'à la fin de la demi-période suivante, c'est-à-dire qu'en fait la course réelle correspondra à 45% pour un affichage de 40%.

Une solution pour pallier cet inconvénient consiste à rendre petit l'angle de rotation correspondant à 10 millisecondes, donc à diminuer la vitesse du vilebrequin en augmentant la démultiplication du réducteur, par rapport au plus petit angle d'espacement de deux fentes du disque. Cette solution conviendrait pour des pompes de grandes cylinrées à mouvement lent.

Pour des pompes plus rapides, une autre solution consiste à répartir les fentes avec entre elles un angle au centre correspondant à l'angle — ou un multiple de celui-ci — parcouru par le vilebrequin à la vitesse de synchronisme du moteur. Ainsi, sur la figure 2 les fentes 32 sont espacées les unes des autres d'un angle égal correspondant à l'angle parcouru en 10 millisecondes par le vilebrequin 4 entraîné par le moteur et le réducteur de l'exemple ci-dessus. En affectant à la fente voisine de l'encoche 35 la valeur 15% et à celle voisine de la fente 33 la valeur 90%, on commet une erreur absolue d'affichage par rapport à la course théorique au plus égale à environ 1,7% en excès ou en défaut. La fente 33 est quant à elle distante de la fente adjacente 32 du double de l'angle susdit (20 millisecondes) et la fente 34 est située par rapport à la fente 33 au triple de cet angle. Compte tenu de leur situation par rapport au point mort arrière (P MAR), l'erreur commise par rapport à la course théorique est extrêmement faible. On notera que la fente 34 qui correspond à 100% de la course, est distante du point mort arrière de 10 millisecondes (en temps) qui correspondent à un temps de repos nécessaire lors de la commutation des triacs.

L'encoche 35 du disque 23a est telle que lorsqu'elle se déplace en regard du capteur 23b, aucune impulsion n'est transmise au compteur 22a. Ce dernier, comme dit plus haut, peut donc compter les impulsions correspondant à la fréquence du réseau lors de la course de retour de l'équipage mobile.

Le fonctionnement du dispositif selon l'invention s'opère de la manière suivante. On supposera tout d'abord que la pompe fonctionne de manière indépendante en fonction de valeurs de consigne affichée au moyen des organes 20 et 29.

La première impulsion émise par le cadenceur 28 parvient au circuit logique 24 qui excite la diode 14. Le moteur est alimenté pour tourner dans un sens. Il accroche rapidement sa vitesse de synchronisme (en général à l'intérieur de la première demi-période du courant d'alimentation). Le disque 23a tourne dans le sens A et le codeur 23 émet des impulsions en direction des compteur 22a et convertisseur 22, jusqu'à l'obtention d'une égalité constatée par le comparateur 21 qui par son signal de sortie impose au circuit 24, d'une part, d'interrompre l'excitation de la diode 14, et d'autre part au bout d'une temporisation de l'ordre de 10 millisecondes d'exciter la diode 15. Le triac 13 devenu passant, le moteur tourne en sens inverse. Dans le même temps, le circuit 24 par une logique de commande incorporée place l'ensemble compteur-convertisseur 22, 22a dans un état dans lequel le compteur peut compter les impulsions reçues en entrée 25 et correspondant à la fréquence du secteur redressée, tandis qu'il est, à chaque impulsion, émise par le codeur 23, remis à zéro. Le disque 23a tourne en sens inverse du sens A. Le bord 35a de l'encoche 35 est lu comme une fente et place le compteur 22a à zéro. Ce dernier compte alors les demi-périodes du courant du réseau jusqu'à obtenir un nombre égal à celui déterminé qu'il possède en consigne au moment de la construction (par exemple 6). Le convertisseur à ce moment émet un signal pour le circuit 24 qui interrompt l'excitation de la diode 15. Le moteur s'arrêtera à la fin de la demi-période suivante et le disque sera dans la position de la figure 2 qui correspond, si on l'a choisi ainsi au point mort avant de l'équipage mobile. On comprend que cette position est atteinte de manière répétitive à la fin de chaque course retour de l'équipage mobile. C'est une position-origine extrêmement fiable.

Un nouveau cycle sera commencé à la réception par le circuit 24 de la prochaine impulsion du cadenceur 28. On voit donc que pour une cadence donnée on peut agir sur le débit en agissant sur la course et que pour une course donnée on peut agir sur le débit en agissant sur la cadence, sachant que dans l'un comme l'autre des cas, le temps de cycle ne peut pas être inférieur au temps d'un aller et retour de l'équipage mobile.

Pour asservir la pompe à, par exemple, un débitmètre à impulsions, il suffit de brancher cet émetteur d'impulsions à l'unité de commande 17 par la prise de connexion 30. Il ne restera alors plus qu'un seul moyen d'agir sur le débit : le réglage de la course. Le débit délivré sera proportionnel au débit principal avec un coefficient de proportionnalité réglable. Dans certains cas, il n'est pas possible d'asservir le débit de la pompe en agissant uniquement sur la cadence. Il faut pouvoir agir sur la valeur de la course, la viscosité du fluide par exemple, ne permettant que des cadences inférieures à un seuil déterminé. On a représenté sur la figure 1 par la référence 18 la fourniture au comparateur 21 d'un signal (courant ou tension) de consigne qui, en alternative de celui réglé par le potentiomètre 20, permet d'asservir la longueur de course à cette valeur de consigne variable. L'organe électronique 18 sert à filtrer, mettre en forme et à une échelle compatible avec le comparateur 21, en réglant notamment le zéro et le gain de cet organe, un courant ou une tension issu d'un capteur (pH, débit, viscosité...) ou d'un régulateur selon que l'on veut réaliser un asservissement en boucle ouverte ou en boucle fermée. La mise en service de cet asservissement par la course met hors circuit le potentiomètre 20 par l'ouverture d'un interrupteur 19 qui peut être réalisée mécaniquement lors de la mise en place d'un connecteur enfichable.

L'un des avantages de la pompe selon l'invention réside dans le fait que l'on peut regrouper dans un même boîtier l'unité de commande 17 et les triacs opto-couplés de commande de l'alimentation du moteur. La pompe peut alors ne présenter que des prises de connexions enfichables au niveau des enroulements du moteur et au niveau du codeur 23. Deux câbles de liaison peuvent suffire pour, d'une part, relier le codeur au boîtier et d'autre part, alimenter le moteur depuis le boîtier de commande par l'intermédiaire des triacs. On peut, dans une version de ce type, placer le boîtier à distance de la pompe et même ne pas utiliser le boîtier. La pompe est alors simplement alimentée par le courant du réseau apporté aux bornes des enroulements du moteur, et fonctionne comme une pompe ordinaire à un débit fixe (son débit maximal), le vilebrequin tournant d'un mouvement continu.

Enfin, dans une variante plus sophistiquée de l'invention, la pompe pourvue du codeur optique peut être connectée à un automate programmable ou un ordinateur ou un microprocesseur avec une électronique d'interface comportant les triacs opto-couplés ou des relais statiques, dans lesquels le circuit électronique 24 et les logiques de commande seraient remplacés par un programme comprenant des instructions de commande en fonction des signaux reçus et les valeurs de consignes.

L'invention trouve une application intéressante dans le domaine des pompes doseuses.

**Revendications**

1. Dispositif de réglage du débit d'une pompe doseuse comportant un organe de pompage (8) attelé à un organe de transmission (4) convertissant le mouvement rotatif d'un moteur (1) d'entraînement réversible en un mouvement alternatif de l'organe de pompage, comprenant des moyens de réglage de l'amplitude du mouvement alternatif avec un capteur (23) du déplacement de l'organe de transmission (4), et des moyens de détection (22) de la position de l'organe de transmission à une position-origine déterminée et comprenant des moyens de réglage de la période de ce mouvement caractérisé en ce que les moyens de réglage de l'amplitude du mouvement alternatif comprennent ;

— un comparateur (21) d'une valeur analogique fonction de la valeur de l'amplitude du déplacement et résultant de la conversion de la pluralité d'impulsions émises par ce capteur (23), à une valeur de consigne réglable (20) émettant en sortie un signal lorsque les valeurs comparées sont égales,

— un circuit (24) électronique de commande recevant en entrée le signal émis par le comparateur (21), qui en réponse à ce signal, d'une part, commute l'alimentation du moteur (1) pour inverser son sens de rotation et, d'autre part, active les moyens de détection (22) qui émettent, en direction du circuit électronique un signal lorsque la position-origine est atteinte, en réponse auquel le circuit électronique (24) commande l'interruption de l'alimentation du moteur (1), et en ce que les moyens de réglage de la période du mouvement sont constitués par un émetteur (28) d'impulsions en direction du circuit électronique (24), en réponse auxquelles ce dernier établit l'alimentation du moteur (1) pour éloigner l'organe de transmission (4) de ladite position-origine.

2. Dispositif selon la revendication 1 caractérisé en ce que le capteur du déplacement de l'organe de transmission est constitué par un codeur optique (23) calé en rotation sur un élément tournant (3) de l'organe de transmission (4) entraîné par le moteur (1).

3. Dispositif selon la revendication 2 caractérisé en ce que les moyens de détection de la position-origine sont constitués par un compteur (22a) des impulsions du courant alternatif d'alimentation du moteur (1), remis à zéro à chaque impulsion émise par le codeur optique (23), ce dernier possédant une plage inactive (35) au voisinage de la position-origine dans laquelle aucune impulsion n'est émise, le compteur (22a) émettant un signal en direction du circuit électronique (24) lorsque les impulsions comptées sont égales à une valeur de consigne.

4. Dispositif selon la revendication 3 caractérisé en ce que le codeur optique (23) comprend un disque (23a) pourvu de fentes périphériques (32, 33, 34) séparées l'une de l'autre d'un angle au centre égal à l'angle de rotation parcouru par l'organe de transmission (3, 4), le moteur (1) ayant atteint sa vitesse de synchronisme,pendant une demi-période du courant l'alimentation du moteur, ou un multiple de cet angle et pourvu d'une encoche (35) d'une longueur périphérique embrassée par un angle au centre au moins égal à l'angle parcouru par le disque (23a) pendant un nombre déterminé de demi-périodes dudit courant.

5. Dispositif selon l'une quelconque des revendications précédentes caractérisé en ce que l'émetteur d'impulsions des moyens de réglage de la période du mouvement alternatif est interne et comporte un moyen (29) de réglage de la fréquence des impulsions qu'il émet.

6. Dispositif selon l'une quelconque des revendications 1 à 4 caractérisé en ce que l'émetteur d'impulsions des moyens de réglage de la période du mouvement alternatif est un émetteur externe.

7. Dispositif selon la revendication 5 et la revendication 6 caractérisé en ce qu'il comporte un commutateur (31) pour assurer la liaison sélective du circuit électronique (24) avec l'émetteur interne (28) ou une entrée (30) de branchement de l'émetteur externe.

8. Dispositif selon l'une quelconque des revendications précédentes, caractérisé en ce qu'il comporte un émetteur interne (20) réglable de la valeur de consigne du déplacement de l'organe de transmission et un moyen de connexion d'un émetteur externe (18) de cette valeur.

9. Dispositif selon l'une quelconque des revendications précédentes, caractérisé en ce que le moteur d'entraînement (1) susdit est un moteur synchrone dont la séquence d'alimentation des enroulements est assurée par des organes (12, 13) de commutation statique couplés (14, 15) à la sortie du circuit électronique (24).

10. Dispositif selon la revendication 1, caractérisé en ce qu'il est disposé à l'exception du codeur, dans un boîtier séparable de la pompe et connectable de manière amovible à cette pompe.

## Patentansprüche

1. Einrichtung zum Regeln der Fördermenge einer Dosierpumpe mit einem Pumpelement (8), welches mit einem die Drehbewegung eines drehrichtungsumkehrbaren Antriebsmotors (1) in eine Hin- und Herbewegung des Pumpelementes (8) umwandelnden Übertragungsorgan (4) gekuppelt ist, umfassend Mittel zum Regeln der Amplitude der Hin- und Herbewegung mit einer Fühleranordnung (23) zum Erfassen der Verstellung des Übertragungsorgans (4), und Detektormittel (22) zum Feststellen der Position des Übertragungsorgans gegenüber einer vorgegebenen Anfangsposition, sowie ferner umfassend Mittel zum Regeln der Periode dieser Bewegung, dadurch **gekennzeichnet**, daß die Mittel zum Regeln der Amplitude der Hin- und Herbewegung umfassen:

— einen Komparator (21) zum Vergleichen eines Analogwertes als Funktion des Wertes für die Amplitude der Verstellung, welcher sich aus der Umwandlung der von der Fühleranordnung (23) abgegebenen Impulsanzahl ergibt, mit einem einstellbaren (20) Vorgabewert, wobei am Ausgang ein Signal abgegeben wird, wenn die verglichenen Werte gleich sind ;

— einen elektronischen Steuerschaltkreis (24), welcher am Eingang das vom Komparator (21) abgegebene Signal empfängt und infolge dieses Signals einerseits die Stromversorgung des Motors (1) umschaltet, um seine Drehrichtung umzukehren, und andererseits die Detektormittel (22) aktiviert, die an den elektronischen Schaltkreis ein Signal abgeben, wenn die Anfangsposition erreicht ist, auf welches hin der elektronische Schaltkreis (24) die Stromversorgung des Motors (1) unterbricht, und daß die Mittel zum Regeln der Periode der Bewegung durch einen Impulsgeber (28) zum Abgeben von Impulsen an den elektronischen Schaltkreis (24) gebildet sind, auf welche hin der letztere die Stromversorgung des Motors (1) einschaltet, um das Übertragungsorgan (4) aus der Anfangsposition heraus zu verstellen.

2. Einrichtung nach Anspruch 1, dadurch **gekennzeichnet**, daß die Fühleranordnung für die Verstellung des Übertragungsorgans durch eine optische Codiereinrichtung (23) gebildet ist, die drehfest mit einem drehenden Element (3) des vom Motor (1) angetriebenen Übertragungsorgans (4) verbunden ist.

3. Einrichtung nach Anspruch 2, dadurch **gekennzeichnet**, daß die Detektormittel zum Feststellen der Anfangsposition durch einen Zähler (22a) zum Zählen der den Motor (1) versorgenden Wechselstromimpulse gebildet sind, die bei jedem von der optischen Codiereinrichtung (23) ausgegebenen Impuls auf Null zurückgesetzt werden, wobei die letztere neben der Anfangsposition einen inaktiven Bereich (35) aufweist, in welchem keine Impulse abgegeben werden, und wobei der Zähler (22a) ein Signal an den elektronischen Schaltkreis (24) abgibt, wenn die gezählten Impulse einem Vorgabewert entsprechen.

4. Einrichtung nach Anspruch 3, dadurch **gekennzeichnet**, daß die optische Codiereinrichtung (23) eine Scheibe (23a) umfaßt, die mit am Umfang angeordneten, jeweils durch einen derartigen Zentriwinkel voneinander getrennten Schlitzen (32, 33, 34) versehen ist, welcher dem Drehwinkel bzw. einem Vielfachen dieses Drehwinkels entspricht, der vom Übertragungsorgan (3, 4) während einer Halbperiode des Versorgungsstromes des Motors durchlaufen wird, wenn der Motor (1) seine Synchrongeschwindigkeit erreicht hat, und daß die Scheibe mit einer Ausnehmung (35) mit einer Umfangslänge versehen ist, die einem Zentriwinkel entspricht, welcher wenigstens dem von der Scheibe (23a) während einer vorgegebenen Anzahl von Halbperioden des Stromes durchlaufenen Winkel gleich ist.

5. Einrichtung nach einem der vorangehenden Ansprüche, dadurch **gekennzeichnet**, daß der Impulsgeber der Mittel zum Regeln der Periode der Hin- und Herbewegung ein interner Impulsgeber ist und eine Einrichtung (29) zum Regeln der Frequenz der von diesem ausgegebenen Impulse aufweist.

6. Einrichtung nach einem der Ansprüche 1 bis 4, dadurch **gekennzeichnet**, daß der Impulsgeber der Mittel zum Regeln der Periode der Hin- und Herbewegung ein externer Impulsgeber ist.

7. Einrichtung nach Anspruch 5 und Anspruch 6, dadurch **gekennzeichnet**, daß sie einen Schalter (31) zum wahlweisen Verbinden des elektronischen Schaltkreises (24) mit dem internen Impulsgeber (28) oder einem Eingangsanschluß (30) des externen Impulsgebers umfaßt.

8. Einrichtung nach einem der vorangehenden Ansprüche, dadurch **gekennzeichnet**, daß sie einen regelbaren internen Geber (20) für den Vorgabewert der Verstellung des Übertragungsorgans und eine Einrichtung zum Anschluß eines externen Gebers (18) für diesen Wert hat.

9. Einrichtung nach einem der vorangehenden Ansprüche, dadurch **gekennzeichnet**, daß der Antriebsmotor (1) ein Synchronmotor ist, bei welchem die Folge der Stromversorgung der Wicklungen durch statische Kommutatororgane (12, 13) bewirkt wird, die mit dem Ausgang des elektronischen Schaltkreises (24) verbunden sind (14, 15).

10. Einrichtung nach Anspruch 1, dadurch **gekennzeichnet**, daß sie mit Ausnahme der Codiereinrichtung in einem von der Pumpe getrennten und mit dieser abnehmbar verbindbaren Gehäuse angeordnet ist.

## Claims

1. A system for controlling the troughput of a metering pump, the pump including a pumping member (8) driven by a transmission member (4) for converting rotary motion of a reversible drive motor (1) into reciprocating motion of the pumping member, the system comprising means for adjusting the amplitude of the reciprocating motion with a sensor (23) for sensing the displacement of the transmission member (4) and detection means (22) for detecting the position of the transmission member (4) at a determined origine portion and means for adjusting the period of said motion, characterized in that the means for adjusting the amplitude of said reciprocating motion comprise :

a comparator (21) for comparing an analog value which is a function of the value of the amplitude of the displacement and resulting from the conversion of a plurality of pulses emitted by said sensor (23) with an adjustable reference value (20) and for emitting an output signal when the compared values are equal ;

an electronic control circuit (24) receiving the signal emitted by the comparator (21) at an input, and responding to said signal firstly by switching over the power supply to the motor (1) in order to reverse its direction of rotation, and secondly by activating said detection means (22) which send a signal to the electronic circuit when the origin position is reached, with the electronic circuit (24) responding thereto by switching off the power supply to the motor (1) ; and in that the means for adjusting the period of the motion are constituted by a pulse generator (28) for sending pulses to the electronic circuit (24) which responds thereto by powering the motor (1) so as to move the transmission member (4) away from said origin position.

2. A system according to claim 1, characterized in that the sensor for sensing displacement of the transmission member is constituted by an optical encoder (23) constrained to rotate with a rotary component (3) of the transmission member (4) driven by the motor (1).

3. A system according to claim 2, characterized in that the means for detecting the origin position are constituted by a counter (22a) for counting pulses of the A.C. power supply to the motor (1), said counter being reset to zero each time a pulse is emitted by the optical encoder (23), said encoder including an inactive range (35) in the vicinity of the origin position during which no pulses are emitted, the counter (22a) sending a signal to the electronic circuit (24) when its pulse count is equal to a reference value.

4. A system according to claim 3, characterized in that the optical encoder (23) comprises a disk (23a) provided both with peripheral slots (32, 33, 34) which are separated from one another by an angle at the center equal to the angle of rotation through which the transmission member (3, 4) travels once the motor (1) has reached synchronous speed for a period of time equal to one half period of the A.C. power supply of the motor, or to a multiple of said angle, and provided also with a notch (35) whose peripheral extent covers an angle at the center which is not less than the angle travelled by the disk (23a) during a determined number of half-periods of said A.C. power supply.

5. A system according to any preceding claim, characterized in that the pulse generator of the means for adjusting the period of the reciprocating reciprocating motion is internal and includes means (29) for adjusting the frequency of the pulses it generates.

6. A system according to any one of claims 1 to 4, characterized in that the pulse generator of the means for adjusting the period of the reciprocating motion is an external generator.

7. A system according to claim 5 and claim 6, characterized in that it includes a switch (31) for selectively connecting the electronic circuit (24) to the internal pulse generator (28) or to an input (30) for connection to the external pulse generator.

8. A system according to any preceding claim, characterized in that it includes an adjustable internal generator (20) for generating the reference value for the displacement of the transmission member, and means for connection to an external generator (18) for generating said value.

9. A system according to any preceding claim, characterized in that said drive motor (1) is a synchronous motor in which the sequencing of the power supply to its windings is provided by static switching members (12, 13) coupled (14, 15) to outputs from the control circuit (24).

10. A system according to claim 1, characterized in that, apart from the encoder, it is disposed in a housing which is separable from the pump and which is removably connected to said pump.

Fig:1

EP 0 321 339 B1

# *Fig. 2*